(19) **Europäisches Patentamt / European Patent Office / Office européen des brevets**

(11) **EP 4 206 956 A1**

(12) # EUROPEAN PATENT APPLICATION
published in accordance with Art. 153(4) EPC

(43) Date of publication:
**05.07.2023 Bulletin 2023/27**

(21) Application number: **21868255.7**

(22) Date of filing: **17.07.2021**

(51) International Patent Classification (IPC):
**G06F 17/16** (2006.01)    **G06F 7/483** (2006.01)

(52) Cooperative Patent Classification (CPC):
**G06F 7/483; G06F 7/485; G06F 7/487;**
**G06F 7/556; G06F 17/16**

(86) International application number:
**PCT/CN2021/106961**

(87) International publication number:
**WO 2022/057426 (24.03.2022 Gazette 2022/12)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **15.09.2020 CN 202010966997**

(71) Applicant: **Huawei Technologies Co., Ltd.**
**Shenzhen, Guangdong 518129 (CN)**

(72) Inventors:
- **ZHANG, Wei**
  **Shenzhen, Guangdong 518129 (CN)**
- **LIN, Tengyi**
  **Shenzhen, Guangdong 518129 (CN)**
- **XU, Xiaoxin**
  **Shenzhen, Guangdong 518129 (CN)**

(74) Representative: **Huawei European IPR**
**Huawei Technologies Duesseldorf GmbH**
**Riesstraße 25**
**80992 München (DE)**

(54) **MATRIX CALCULATION METHOD AND RELATED DEVICE**

(57) A matrix computing method is provided, relates to the field of computer technologies, and is used to implement high-precision matrix computing based on a low-precision matrix computing unit, so as to improve applicability of the matrix computing unit. The method includes: obtaining a computing instruction, where the computing instruction includes a to-be-computed matrix and a matrix computing type; disassembling the to-be-computed matrix to obtain a plurality of disassembled matrices, where precision of a floating point number in the disassembled matrix is lower than precision of a floating point number in the to-be-computed matrix; and performing computing processing on the plurality of disassembled matrices based on the matrix computing type.

```
┌─────────────────────────────────────────────────────┐
│ Obtain a computing instruction, where the computing  │
│ instruction includes a to-be-computed matrix and a   │──S301
│ matrix computing type                                │
└─────────────────────────────────────────────────────┘
                          ↓
┌ ─ ─ ─ ─ ─ ─ ─ ─ ─ ─ ─ ─ ─ ─ ─ ─ ─ ─ ─ ─ ─ ─ ─ ─ ─ ┐
  Determine that precision of a floating point number
│ in the to-be-computed matrix is higher than preset   │──S302a
  precision
└ ─ ─ ─ ─ ─ ─ ─ ─ ─ ─ ─ ─ ─ ─ ─ ─ ─ ─ ─ ─ ─ ─ ─ ─ ─ ┘
                          ↓
┌─────────────────────────────────────────────────────┐
│ Disassemble the to-be-computed matrix to obtain a    │
│ plurality of disassembled matrices, where precision  │
│ of a floating point number in the disassembled       │──S302
│ matrix is lower than the precision of the floating   │
│ point number in the to-be-computed matrix            │
└─────────────────────────────────────────────────────┘
                          ↓
┌─────────────────────────────────────────────────────┐
│ Perform computing processing on the plurality of     │──S303
│ disassembled matrices based on the matrix computing  │
│ type                                                 │
└─────────────────────────────────────────────────────┘
```

FIG. 4

EP 4 206 956 A1

**Description**

**TECHNICAL FIELD**

This application relates to the field of computer technologies, and in particular, to a matrix computing method, an apparatus, a circuit, a system, a chip, and a device.

**BACKGROUND**

In the field of computer technologies, a floating point (float point, FP) number is mainly used to represent a decimal, and the floating point number usually includes three parts: a sign bit, an exponent bit, and a mantissa bit. Floating point number-based matrix computing is a common computing method, and may be applied to a plurality of scenarios such as artificial intelligence, deep learning, and high performance computing.

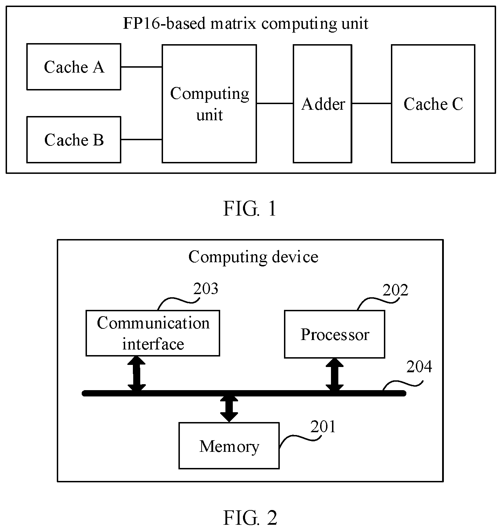

In the conventional technology, in floating point number-based matrix computing, a matrix computing unit based on a half-precision floating point number is provided. The half-precision floating point number has a bit width of 16 bits (bits), and therefore may be referred to as FP16. As shown in FIG. 1, the matrix computing unit includes a cache A, a cache B, a computing unit, an adder, and a cache C. The cache A and the cache B each are configured to cache a to-be-computed matrix, the computing unit is configured to implement a multiplication operation between matrices, the accumulator is configured to implement an addition operation between matrices, and the cache C is configured to cache a matrix computing result.

However, both a mantissa computing bit width and an exponent computing bit width in the foregoing matrix computing unit are designed based on FP16, and therefore are applicable to only FP16-based matrix computing, but are not applicable to matrix computing based on a floating point number with a relatively large bit width. Consequently, applicability is poor.

**SUMMARY**

This application provides a matrix computing method, an apparatus, a circuit, a system, a chip, and a device, to implement high-precision matrix computing based on a low-precision matrix computing unit, so as to improve applicability of the matrix computing unit.

According to a first aspect, a matrix computing method is provided. The method is performed by a matrix computing unit, the matrix computing unit may be a matrix computing unit designed based on FP16, and the method includes: obtaining a computing instruction, where the computing instruction includes a to-be-computed matrix and a matrix computing type, precision of a floating point number in the to-be-computed matrix may be higher than FP16, and the matrix computing type may include matrix multiplication, matrix addition, matrix multiplication-addition, and the like; disassembling the to-be-computed matrix to obtain a plurality of disassembled matrices, where precision of a floating point number in the disassembled matrix is lower than the precision of the floating point number in the to-be-computed matrix, the precision of the floating point number in the disassembled matrix may be represented as second precision, the precision of the floating point number in the to-be-computed matrix is represented as first precision, and for example, the first precision is FP32, FP64, or FP128 and the second precision is FP16; and performing computing processing on the plurality of disassembled matrices based on the matrix computing type, to obtain a matrix operation result.

In the foregoing technical solutions, when the to-be-computed matrix and the matrix computing type are obtained, if the precision of the floating point number in the to-be-computed matrix is relatively high, the to-be-computed matrix may be disassembled into a plurality of matrices including low-precision floating point numbers, for example, disassembled into a plurality of matrices including FP16 floating point numbers, and computing processing is performed, based on the matrix computing type, on the plurality of matrices including the FP16 floating point numbers, to obtain a matrix operation result corresponding to the to-be-computed matrix. In this way, high-precision matrix computing can be implemented based on a low-precision matrix computing unit, so that applicability of the matrix computing unit is improved. In addition, in a matrix computing process, upper-layer software applications such as an AI application and an HPC application based on the matrix computing unit are unaware of a specific matrix computing process, so that software adaptation costs can be greatly reduced.

In a possible implementation, the disassembling the to-be-computed matrix to obtain a plurality of disassembled matrices includes: disassembling the to-be-computed matrix according to a preset rule to obtain the plurality of disassembled matrices, where the preset rule is used to disassemble a floating point number with first precision in the to-be-computed matrix into floating point numbers with second precision, and the second precision is lower than the first precision. For example, the first precision is FP32, FP64, or FP128, and the second precision is FP16. In the foregoing possible implementation, according to the preset rule, the to-be-computed matrix may be disassembled into a plurality of matrices including low-precision floating point numbers, for example, disassembled into a plurality of matrices including FP16 floating point numbers. In this way, high-precision matrix computing can be implemented based on a low-precision matrix computing unit, so that applicability of the matrix computing unit is improved.

In another possible implementation, the disassembling the to-be-computed matrix to obtain a plurality of disassembled matrices includes: disassembling the to-be-computed matrix including a floating point number with first precision into a plurality of matrices including floating point numbers with second precision and a plurality of exponent matrices, where the second precision is lower than the first precision. For example, the first precision is FP32, FP64, or FP128, and the second precision is FP16. In the foregoing possible implementation, the to-be-computed matrix including the floating point number with the first precision is disassembled into the plurality of matrices including the floating point numbers with the second precision and the plurality of exponent matrices, for example, disassembled into a plurality of matrices including FP16 floating point numbers and a plurality of exponent matrices. In this way, high-precision matrix computing can be implemented based on a low-precision matrix computing unit, so that applicability of the matrix computing unit is improved.

In another possible implementation, the disassembling the to-be-computed matrix including a floating point number with first precision into a plurality of matrices including floating point numbers with second precision and a plurality of exponent matrices includes: disassembling the to-be-computed matrix including the floating point number with the first precision into a plurality of column matrices by column; and disassembling each of the plurality of column matrices into one first submatrix including a floating point number with the second precision and one first exponent matrix, to obtain a plurality of first submatrices and a plurality of first exponent matrices, where a first submatrix and a first exponent matrix obtained by disassembling a same column matrix correspond to each other. In the foregoing possible implementation, a method for disassembling the to-be-computed matrix into the matrices including the floating point numbers with the second precision is provided, and may be used to effectively disassemble a first matrix when the first matrix and a second matrix are multiplied.

In another possible implementation, the disassembling the to-be-computed matrix including a floating point number with first precision into a plurality of matrices including floating point numbers with second precision and a plurality of exponent matrices includes: disassembling the to-be-computed matrix including the floating point number with the first precision into a plurality of row matrices by row; and disassembling each of the plurality of row matrices into one second submatrix including a floating point number with the second precision and one second exponent matrix, to obtain a plurality of second submatrices and a plurality of second exponent matrices, where a second submatrix and a second exponent matrix obtained by disassembling a same row matrix correspond to each other. In the foregoing possible implementation, a method for disassembling the to-be-computed matrix into the matrices including the floating point numbers with the second precision is provided, and may be used to effectively disassemble a second matrix when a first matrix and the second matrix are multiplied.

In another possible implementation, the to-be-computed matrix includes a first matrix and a second matrix, disassembled matrices corresponding to the first matrix include a plurality of first submatrices and a plurality of first exponent matrices, disassembled matrices corresponding to the second matrix include a plurality of second submatrices and a plurality of second exponent matrices, there are correspondences between the plurality of first submatrices, the plurality of first exponent matrices, the plurality of second submatrices, and the plurality of second exponent matrices, and when the matrix computing type is matrix multiplication, the performing computing processing on the plurality of disassembled matrices based on the matrix computing type includes: determining a first operation result of each first submatrix and a corresponding second submatrix based on a correspondence between the plurality of first submatrices and the plurality of second submatrices, to obtain a plurality of first operation results; determining a second operation result of each first exponent matrix and a corresponding second exponent matrix based on a correspondence between the plurality of first exponent matrices and the plurality of second exponent matrices, to obtain a plurality of second operation results; and determining a matrix operation result of the first matrix and the second matrix based on a correspondence between the plurality of first submatrices and the plurality of first exponent matrices, the plurality of first operation results, and the plurality of second operation results. In the foregoing possible implementation, a method for performing computing processing on the plurality of disassembled matrices based on the matrix computing type to obtain a matrix computing result is provided. In this way, high-precision matrix computing can be implemented based on a low-precision matrix computing unit, so that applicability of the matrix computing unit is improved.

In another possible implementation, the determining a matrix operation result of the first matrix and the second matrix based on a correspondence between the plurality of first submatrices and the plurality of first exponent matrices, the plurality of first operation results, and the plurality of second operation results includes: determining a third operation result based on each of the plurality of first operation results and a second operation result corresponding to the first operation result, to obtain a plurality of third operation results, where a first operation result of a first submatrix corresponds to a second operation result of a first exponent matrix corresponding to the first submatrix; and determining the matrix operation result of the first matrix and the second matrix based on the plurality of third operation results. In the foregoing possible implementation, a method for determining the matrix operation result of the first matrix and the second matrix is provided. In this way, high-precision matrix computing can be implemented based on a low-precision matrix computing unit, so that applicability of the matrix computing unit is improved.

In another possible implementation, two floating point numbers at a same location in a first exponent matrix and a corresponding second exponent matrix are X and Y, and a floating point number Z at the same location in a corresponding second operation result satisfies the following formula: $Z=2^{\wedge}(expX+expY-Q\times2)$, where Q is related to precision of floating point numbers included in the first matrix and the second matrix, and exp represents an exponential function. In the foregoing possible implementation, computing processing between disassembled exponent matrices is provided, so that it can be ensured that a matrix computing result corresponding to the to-be-computed matrix is obtained through computing based on the disassembled matrices. In this way, high-precision matrix computing can be implemented based on a low-precision matrix computing unit, so that applicability of the matrix computing unit is improved.

In another possible implementation, the matrix computing unit is integrated into a general-purpose processor, and the obtaining a computing instruction includes: obtaining the computing instruction from a register; or the matrix computing unit is integrated outside a general-purpose processor, and the obtaining a computing instruction includes: obtaining the computing instruction from a memory. In the foregoing possible implementation, two manners of integrating the matrix computing unit and the general-purpose processor are provided, so that flexibility and diversity of integration of the matrix computing unit can be improved.

In another possible implementation, the precision of the floating point number in the to-be-computed matrix is FP32 or FP64, and the precision of the floating point number in the disassembled matrix is FP16. In the foregoing possible implementation, a to-be-computed matrix in which precision of a floating point number is FP32 or FP64 may be disassembled, to obtain a plurality of matrices in which precision of floating point numbers is FP16, and a matrix computing result corresponding to the to-be-computed matrix is obtained through computing based on the disassembled matrices. Therefore, applicability of the matrix computing unit is improved.

In another possible implementation, before the disassembling the to-be-computed matrix to obtain a plurality of disassembled matrices, the method further includes: determining that the precision of the floating point number in the to-be-computed matrix is higher than preset precision. In the foregoing possible implementation, when high-precision matrix computing is implemented based on a low-precision matrix computing unit, disassembling may be performed when it is determined that the precision of the floating point number in the to-be-computed matrix is higher than the preset precision, so that a matrix computing result corresponding to the to-be-computed matrix is obtained through computing based on the disassembled matrices, and then applicability of the matrix computing unit is improved.

According to a second aspect, a matrix computing apparatus is provided. The apparatus may be a matrix computing unit designed based on FP16, and the apparatus includes: an obtaining unit, configured to obtain a computing instruction, where the computing instruction includes a to-be-computed matrix and a matrix computing type, precision of a floating point number in the to-be-computed matrix may be higher than FP16, and the matrix computing type may include matrix multiplication, matrix addition, matrix multiplication-addition, and the like; a disassembling unit, configured to disassemble the to-be-computed matrix to obtain a plurality of disassembled matrices, where precision of a floating point number in the disassembled matrix is lower than the precision of the floating point number in the to-be-computed matrix, the precision of the floating point number in the disassembled matrix may be represented as second precision, the precision of the floating point number in the to-be-computed matrix is represented as first precision, and for example, the first precision is FP32, FP64, or FP128 and the second precision is FP16; and a computing unit, configured to perform computing processing on the plurality of disassembled matrices based on the matrix computing type, to obtain a matrix operation result.

In a possible implementation, the disassembling unit is further configured to disassemble the to-be-computed matrix according to a preset rule to obtain the plurality of disassembled matrices, where the preset rule is used to disassemble a floating point number with first precision in the to-be-computed matrix into floating point numbers with second precision, and the second precision is lower than the first precision. For example, the first precision is FP32, FP64, or FP128, and the second precision is FP16.

In a possible implementation, the disassembling unit is further configured to disassemble the to-be-computed matrix including a floating point number with first precision into a plurality of matrices including floating point numbers with second precision and a plurality of exponent matrices, where the second precision is lower than the first precision. For example, the first precision is FP32, FP64, or FP128, and the second precision is FP16.

In a possible implementation, the disassembling unit is further configured to: disassemble the to-be-computed matrix including the floating point number with the first precision into a plurality of column matrices by column; and disassemble each of the plurality of column matrices into one first submatrix including a floating point number with the second precision and one first exponent matrix, to obtain a plurality of first submatrices and a plurality of first exponent matrices, where a first submatrix and a first exponent matrix obtained by disassembling a same column matrix correspond to each other.

In a possible implementation, the disassembling unit is further configured to: disassemble the to-be-computed matrix including the floating point number with the first precision into a plurality of row matrices by row; and disassemble each of the plurality of row matrices into one second submatrix including a floating point number with the second precision and one second exponent matrix, to obtain a plurality of second submatrices and a plurality of second exponent matrices, where a second submatrix and a second exponent matrix obtained by disassembling a same row matrix correspond to each other.

In another possible implementation, the to-be-computed matrix includes a first matrix and a second matrix, disassembled matrices corresponding to the first matrix include a plurality of first submatrices and a plurality of first exponent matrices, disassembled matrices corresponding to the second matrix include a plurality of second submatrices and a plurality of second exponent matrices, there are correspondences between the plurality of first submatrices, the plurality of first exponent matrices, the plurality of second submatrices, and the plurality of second exponent matrices, and when the matrix computing type is matrix multiplication, the computing unit is further configured to: determine a first operation result of each first submatrix and a corresponding second submatrix based on a correspondence between the plurality of first submatrices and the plurality of second submatrices, to obtain a plurality of first operation results; determine a second operation result of each first exponent matrix and a corresponding second exponent matrix based on a correspondence between the plurality of first exponent matrices and the plurality of second exponent matrices, to obtain a plurality of second operation results; and determine a matrix operation result of the first matrix and the second matrix based on a correspondence between the plurality of first submatrices and the plurality of first exponent matrices, the plurality of first operation results, and the plurality of second operation results.

In another possible implementation, the computing unit is further configured to: determine a third operation result based on each of the plurality of first operation results and a second operation result corresponding to the first operation result, to obtain a plurality of third operation results, where a first operation result of a first submatrix corresponds to a second operation result of a first exponent matrix corresponding to the first submatrix; and determine the matrix operation result of the first matrix and the second matrix based on the plurality of third operation results.

In another possible implementation, two floating point numbers at a same location in a first exponent matrix and a corresponding second exponent matrix are X and Y, and a floating point number Z at the same location in a corresponding second operation result satisfies the following formula: $Z=2^{\wedge}(expX+expY-Q\times2)$, where Q is related to precision of floating point numbers included in the first matrix and the second matrix, and exp represents an exponential function.

In a possible implementation, the matrix computing unit is integrated into a general-purpose processor, and the obtaining unit is further configured to obtain the computing instruction from a register; or the matrix computing unit is integrated outside a general-purpose processor, and the obtaining unit is further configured to obtain the computing instruction from a memory.

In another possible implementation, the precision of the floating point number in the to-be-computed matrix is FP32 or FP64, and the precision of the floating point number in the disassembled matrix is FP16.

In another possible implementation, the disassembling unit is further configured to determine that the precision of the floating point number in the to-be-computed matrix is higher than preset precision.

According to a third aspect, a matrix computing circuit is provided. The matrix computing circuit is configured to perform operation steps of the matrix computing method provided in any one of the first aspect or the possible implementations of the first aspect.

According to a fourth aspect, a matrix computing system is provided. The system includes a processor and a matrix computing unit. The processor is configured to send a computing instruction to the matrix computing unit, and the matrix computing unit is configured to perform operation steps of the matrix computing method provided in any one of the first aspect or the possible implementations of the first aspect.

According to a fifth aspect, a chip is provided. The chip includes a processor, a matrix computing unit is integrated into the processor, and the matrix computing unit is configured to perform operation steps of the matrix computing method provided in any one of the first aspect or the possible implementations of the first aspect.

According to a sixth aspect, a matrix computing device is provided. The device includes the matrix computing system provided in the fourth aspect or the chip provided in the fourth aspect.

According to a seventh aspect, a readable storage medium is provided. The readable storage medium stores instructions, and when the readable storage medium runs on a device, the device is enabled to perform operation steps of the matrix computing method provided in any one of the first aspect or the possible implementations of the first aspect.

According to an eighth aspect, a computer program product is provided. When the computer program product runs on a computer, the computer is enabled to perform operation steps of the matrix computing method provided in any one of the first aspect or the possible implementations of the first aspect.

It may be understood that any one of the apparatus for performing the matrix computing method, the computer storage medium, or the computer program product provided above is configured to perform the corresponding method provided above. Therefore, for beneficial effects that can be achieved by the apparatus, computer storage medium, or computer program product, refer to the beneficial effects in the corresponding method provided above. Details are not described herein again.

In this application, based on implementations according to the foregoing aspects, the implementations may be further combined to provide more implementations.

**BRIEF DESCRIPTION OF DRAWINGS**

FIG. 1 is a schematic diagram of a structure of a matrix computing unit;
FIG. 2 is a schematic diagram of a structure of a computing device according to an embodiment of this application;
FIG. 3 is a schematic diagram of a structure of a processor according to an embodiment of this application;
FIG. 4 is a schematic flowchart of a matrix computing method according to an embodiment of this application;
FIG. 5 is a schematic diagram of disassembling a to-be-computed matrix according to an embodiment of this application;
FIG. 6 is a schematic diagram of a structure of a matrix computing unit according to an embodiment of this application;
FIG. 7 is a schematic flowchart of another matrix computing method according to an embodiment of this application;
FIG. 8 is a schematic diagram of a structure of a matrix disassembling unit according to an embodiment of this application; and
FIG. 9 is a schematic diagram of a structure of a matrix computing apparatus according to an embodiment of this application.

**DESCRIPTION OF EMBODIMENTS**

First, before the embodiments are described, types of floating point numbers in the embodiments are explained and described.

A floating point (float point, FP) number is mainly used to represent a decimal, and usually includes three parts: a sign (sign) bit, an exponent (exponent) bit, and a mantissa (mantissa) bit. The exponent bit may also be referred to as an exponent, and is referred to as the exponent below. The sign bit may be 1 bit (bit), and the exponent and the mantissa bit each may be a plurality of bits (bits). Usually, floating point numbers may have three formats (format): a half-precision floating point number, a single-precision floating point number, and a double-precision floating point number. Details are described as follows.

A half-precision floating point (half-precision floating-point) number is a binary data type used on a computer, occupies 16 bits (that is, occupies 2 bytes) in a computer memory, and may be referred to as FP16 for short. An absolute value range of a value that can be represented by the half-precision floating point number is approximately $[6.10 \times 10^{-5}, 6.55 \times 10^{4}]$.

A single-precision floating point (single-precision floating-point) number is a binary data type used on a computer, occupies 32 bits (that is, occupies 4 bytes) in a computer memory, and may be referred to as FP32 for short. An absolute value range of a value that can be represented by the single-precision floating point number is approximately $[1.18 \times 10^{-38}, 3.40 \times 10^{38}]$.

A double-precision floating point (double precision floating point) number is a binary data type used on a computer, occupies 64 bits (that is, occupies 8 bytes) in a computer memory, and may be referred to as FP64 for short. The double-precision floating point number can represent a 15-bit or 16-bit decimal significant figure. An absolute value range of a value that can be represented by the double-precision floating point number is approximately $[2.23 \times 10^{-308}, 1.80 \times 10^{308}]$.

Table 1 below shows a storage format of each of the foregoing three types of floating point numbers. In 16 bits occupied by FP16, a sign bit occupies 1 bit, an exponent occupies 5 bits, and a mantissa bit occupies 10 bits. In 32 bits occupied by FP32, a sign bit occupies 1 bit, an exponent occupies 8 bits, and a mantissa bit occupies 23 bits. In 64 bits occupied by FP64, a sign bit occupies 1 bit, an exponent occupies 11 bits, and a mantissa bit occupies 52 bits.

**Table 1**

|  | Sign bit | Exponent bit (exponent) | Mantissa bit |
|---|---|---|---|
| FP16 | 1 bit | 5 bits | 10 bits |
| FP32 | 1 bit | 8 bits | 23 bits |
| FP64 | 1 bit | 11 bits | 52 bits |

Further, in actual application, to represent a higher-precision floating point number, a format of a floating point number, a storage format in which more bits are occupied, and the like may be further extended, for example, a floating point number occupying 128 bits (which may be referred to as FP128 for short). This is not specifically limited in embodiments of this application.

A floating point number matrix may be a matrix in which a floating point number is used as an element. For example, a floating point number matrix with m rows and n columns includes m×n elements, and the m×n elements may be floating point numbers. Similar to the floating point numbers, there may also be floating point number matrices having different floating point number formats, for example, a floating point number matrix in an FP16 format, a floating point number matrix in an FP32 format, and a floating point number matrix in an FP64 format.

FIG. 2 is a schematic diagram of a structure of a computing device according to an embodiment. The computing device may be a device having a computing capability, for example, a terminal, a network device, or a server. As shown in FIG. 2, the computing device may include a memory 201, a processor 202, a communication interface 203, and a bus 204. The memory 201, the processor 202, and the communication interface 203 are connected to each other by using the bus 204.

The memory 201 may be configured to store data, a software program, and a module, and mainly includes a program storage area and a data storage area. The program storage area may store an operating system, a software application required by at least one function, intermediate-layer software, and the like. The data storage area may store data created when the device is used, and the like. For example, the operating system may include a Linux operating system, a Unix operating system, a Window operating system, or the like. The software application required by the at least one function may include an artificial intelligence (artificial intelligence)-related application, a high performance computing (high performance computing, HPC)-related application, a deep learning (deep learning)-related application, a scientific computing-related application, or the like. The intermediate-layer software may include a linear algebra library function or the like. In a possible example, the memory 201 includes but is not limited to a static random access memory (static RAM, SRAM), a dynamic random access memory (dynamic RAM, DRAM), a synchronous dynamic random access memory (synchronous DRAM, SDRAM), a high-speed random access memory, or the like. Further, the memory 201 may include another nonvolatile memory, for example, at least one magnetic disk storage device, a flash memory device, or another volatile solid-state storage device.

In addition, the processor 202 is configured to control and manage an operation of the computing device, for example, perform various functions of the computing device and process data by running or executing the software program and/or the module stored in the memory 201 and invoking the data stored in the memory 201. In a possible example, the processor 202 includes but is not limited to a central processing unit (central processing unit, CPU), a network processing unit (network processing unit, NPU), a graphics processing unit (graphics processing unit, GPU), an application-specific integrated circuit (application specific integrated circuit, ASIC), a field programmable gate array (field programmable gate array, FPGA) or another programmable logic device, a transistor logic device, a logic circuit, or any combination thereof. The processor may implement or execute logical blocks, modules, and circuits in various examples described with reference to content disclosed in this application. Alternatively, the processor 202 may be a combination of processors implementing a computing function, for example, a combination of one or more microprocessors, or a combination of a digital signal processor and a microprocessor.

The communication interface 203 is configured to implement communication between the computing device and an external device. The communication interface 203 may include an input interface and an output interface. The input interface may be configured to obtain floating point number matrices such as a first matrix and a second matrix in the following method embodiment. In some feasible embodiments, there may be only one input interface, or there may be a plurality of input interfaces. The output interface may be configured to output a matrix operation result in the following method embodiment. In some feasible embodiments, the matrix operation result may be directly output by the processor, or may be first stored in the memory and then output by the memory. In some other feasible embodiments, there may be only one output interface, or there may be a plurality of output interfaces.

The bus 204 may be a peripheral component interconnect express (Peripheral Component Interconnect Express, PCIe) bus, an extended industry standard architecture (extended industry standard architecture, EISA) bus, or the like. The bus 204 may be classified into an address bus, a data bus, a control bus, or the like. For ease of representation, only one bold line is used for representation in FIG. 2, but this does not mean that there is only one bus or only one type of bus.

In this embodiment, the processor 202 may include a matrix computing unit. The matrix computing unit may be configured to support the processor in performing one or more steps in the following method embodiment. The matrix computing unit may be an ASIC, an FPGA, a logic circuit, or the like. Certainly, the matrix computing unit may alternatively be implemented by using software. This is not specifically limited in this embodiment of this application.

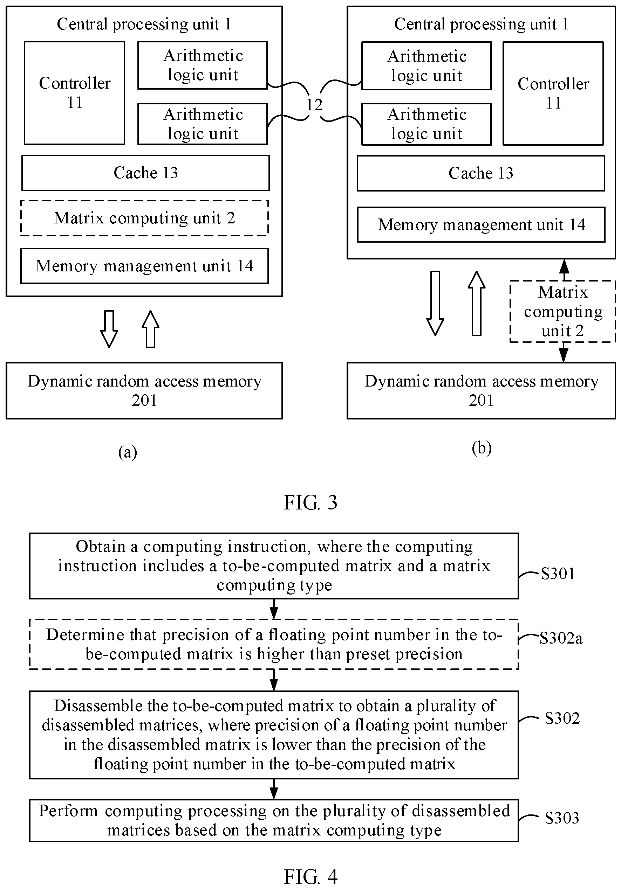

Further, the processor 202 may include one or more of other processing units such as a CPU, a GPU, or an NPU. As shown in FIG. 3, that the processor 202 includes a CPU 1 and a matrix computing unit 2 is used as an example. The matrix computing unit 2 may be integrated with the CPU 1 (for example, the matrix computing unit 2 is integrated inside an SoC in which the CPU 1 is located), or may be separately disposed in parallel with the CPU 1 (for example, the matrix computing unit 2 is disposed in a form of a PCIe card). Details are shown in (a) in FIG. 3 and (b) in FIG. 3.

Further, the CPU 1 may include a controller (controller) 11, one or more arithmetic logic units (arithmetic logic unit, ALU) 12, a cache (cache) 13, a memory management unit (memory management unit, MMU) 14, and the like. In FIG. 3, an example in which the memory 201 is a dynamic random access memory DRAM is used for description.

FIG. 4 is a schematic flowchart of a matrix computing method according to an embodiment. The method may be performed by a matrix computing unit in a computing device provided in this specification. The method may include the following steps.

S301: Obtain a computing instruction, where the computing instruction includes a to-be-computed matrix and a matrix computing type.

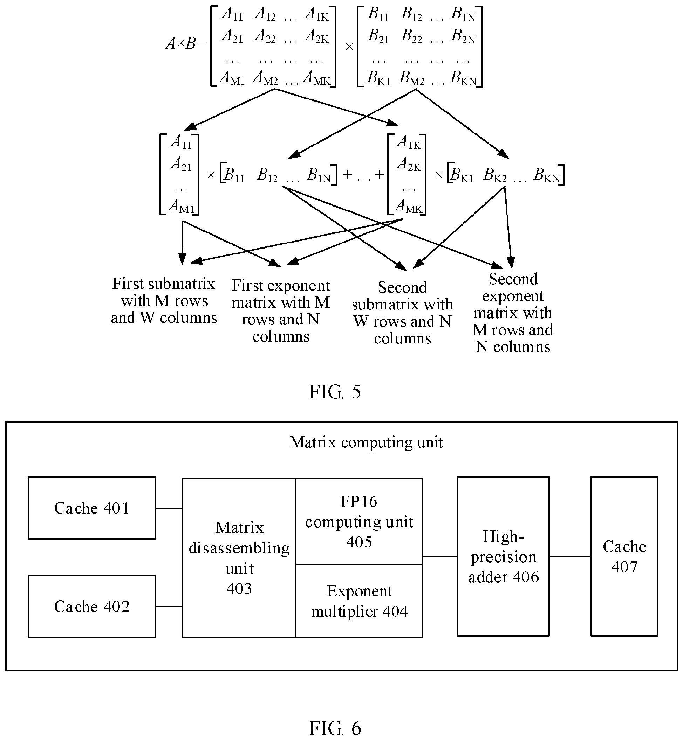

The matrix computing unit may be a matrix computing unit designed based on a low-precision floating point number. For example, the matrix computing unit may be a matrix computing unit designed based on FP16. Optionally, in this embodiment of this application, a bit width of an adder included in the matrix computing unit may be extended, to implement addition of high-precision floating point numbers. For example, the adder is extended to a high-precision adder shown in FIG. 6 below. The low precision and the high precision herein are relative. For example, if the low precision is FP16, precision such as FP32 and FP64 higher than FP16 may be considered as high precision.

In addition, there may be one or more to-be-computed matrices, and precision of a floating point number in the one or more matrices may be represented as first precision. The first precision may be higher than FP16. For example, the first precision may be FP32, FP64, FP128, or the like. The matrix computing type may include matrix multiplication, matrix addition, matrix multiplication-addition, and the like. The matrix multiplication-addition is hybrid computing of matrix addition and matrix multiplication. For example, if a matrix A and a matrix B are used as an example, the matrix multiplication may be represented as A×B, and the matrix addition may be represented as A+B. If a matrix A, a matrix B, and a matrix C are used as an example, the matrix multiplication-addition may be represented as A×B+C. The matrix A, the matrix B, and the matrix C herein may be different matrices, or may be a same matrix. This is not specifically limited in this embodiment of this application.

Specifically, when a processor of the computing device includes a CPU and the matrix computing unit, upper-layer software (for example, an AI application, an HPC application, and a scientific computing application) based on the processor may send a matrix computing request to the CPU by using a uniformly encapsulated linear algebraic function library. The request may carry the to-be-computed matrix and the matrix computing type. When the CPU receives the request, the CPU may schedule the matrix computing unit to execute a matrix computing task. In a possible implementation, if the matrix computing unit is integrated into the CPU, the CPU may store the to-be-computed matrix and the matrix computing type in the matrix computing request in a register, so that when executing the matrix computing task, the matrix computing unit may obtain the computing instruction from the register, to obtain the to-be-computed matrix and the matrix computing type. In another possible implementation, if the matrix computing unit is parallel to the CPU and integrated separately, the CPU may store the to-be-computed matrix and the matrix computing type in the matrix computing request in memory, so that when executing the matrix computing task, the matrix computing unit may obtain the computing instruction from the memory, to obtain the to-be-computed matrix and the matrix computing type.

S302: Disassemble the to-be-computed matrix to obtain a plurality of disassembled matrices, where precision of a floating point number in the disassembled matrix is lower than precision of a floating point number in the to-be-computed matrix.

The precision of the floating point number in the disassembled matrix may be represented as second precision, the precision of the floating point number in the to-be-computed matrix is represented as first precision, and the second precision is lower than the first precision, or the first precision is higher than the second precision. For example, the first precision is FP32, FP64, FP128, or the like, and the second precision is FP16.

In addition, the disassembling the to-be-computed matrix to obtain a plurality of disassembled matrices may include: disassembling the to-be-computed matrix according to a preset rule to obtain the plurality of disassembled matrices, where the preset rule is used to disassemble a floating point number with the first precision in the to-be-computed matrix into floating point numbers with the second precision, and the second precision is lower than the first precision. The preset rule may be set in advance. Alternatively, the disassembling the to-be-computed matrix to obtain a plurality of disassembled matrices may include: disassembling the to-be-computed matrix including a floating point number with the first precision into a plurality of matrices including floating point numbers with the second precision and a plurality of exponent matrices. The exponent matrix may be a matrix in which an exponent is used as an element.

Specifically, there may be one or more to-be-computed matrices, and each of the one or more matrices includes a floating point number with the first precision. Each matrix may be disassembled in one of the following manners, to obtain a plurality of corresponding disassembled matrices, and the disassembled matrix may include a floating point number with the second precision.

In a first manner, the to-be-computed matrix includes a first matrix, and a process of disassembling the first matrix into a plurality of disassembled matrices may be: disassembling the first matrix into a plurality of column matrices by column, where precision of a floating point number in each column matrix is the first precision; and disassembling each of the plurality of column matrices into one first submatrix and one first exponent matrix corresponding to the first submatrix, where precision of a floating point number in the first submatrix is the second precision. In this way, a plurality of first submatrices and a plurality of first exponent matrices are correspondingly obtained after the plurality of column matrices are disassembled.

For example, the first matrix is a matrix with M rows and K columns. Specifically, the first matrix may be disassembled into K column matrices, and each column matrix includes M floating point numbers with the first precision. Each of the K column matrices is disassembled into one first submatrix with M rows and W columns and floating point numbers with the second precision and one first exponent matrix with M rows and N columns, and the first submatrix corresponds to the first exponent matrix.

In a second manner, the to-be-computed matrix includes a second matrix, and a process of disassembling the second matrix into a plurality of disassembled matrices may be: disassembling the second matrix into a plurality of row matrices by row, where precision of a floating point number in each row matrix is the first precision; and disassembling each of the plurality of row matrices into one second submatrix and one second exponent matrix corresponding to the second submatrix, where precision of a floating point number in the second submatrix is the second precision. In this way, a plurality of second submatrices and a plurality of second exponent matrices are correspondingly obtained after the plurality of row matrices are disassembled.

For example, the second matrix is a matrix with K rows and N columns. Specifically, the second matrix may be disassembled into K row matrices, and each row matrix includes N floating point numbers with the first precision. Each of the K row matrices is disassembled into one second submatrix with W rows and N columns and floating point numbers with the second precision and one second exponent matrix with M rows and N columns, and the second submatrix corresponds to the second exponent matrix.

In the foregoing two manners, M, K, W, and N are all positive integers, specific values of M, K, and N may depend on a quantity of rows or a quantity of columns of the to-be-computed matrix, and a specific value of W is related to the first precision and the second precision. Optionally, the specific value of W may be set in advance. For example, when the first precision is FP32 and the second precision is FP16, W may be equal to 9; or when the first precision is FP64 and the second precision is FP16, W may be equal to 32.

In a possible embodiment, when the to-be-computed matrix includes a matrix A and a matrix B, and the matrix computing type is matrix multiplication (that is, $A \times B$), the matrix A may be disassembled in the foregoing first manner, and the matrix B may be disassembled in the foregoing second manner, to obtain a plurality of first submatrices and a plurality of first exponent matrices corresponding to the matrix A, and a plurality of second submatrices and a plurality of second exponent matrices corresponding to the matrix B. The plurality of first submatrices obtained by disassembling the matrix A one-to-one correspond to the plurality of second submatrices obtained by disassembling the matrix B, and the plurality of first exponent matrices also one-to-one correspond to the plurality of second exponent matrices. Optionally, a first submatrix obtained after a column matrix is disassembled corresponds to a second submatrix obtained after a row matrix corresponding to the column matrix is disassembled, a first submatrix and a first exponent matrix obtained after a same column matrix is disassembled correspond to each other, and a second submatrix and a second exponent matrix obtained after a same row matrix is disassembled correspond to each other.

For example, as shown in FIG. 5, it is assumed that a matrix A with M rows and K columns is multiplied by a matrix B with K rows and N columns. For the matrix A with the M rows and the K columns, the matrix A is disassembled into K column matrices by column, that is, $[A_{11} A_{21} ... A_{M1}]^T$, $[A_{12} A_{22} ... A_{M2}]^T$, ..., and $[A_{1K} A_{2K} ... A_{MK}]^T$ are obtained, where $[\ ]^T$ represents transpose of a matrix; and then each column matrix is disassembled into one first submatrix (including a floating point number with the second precision) with M rows and W columns and one first exponent matrix (corresponding to the first submatrix) with M rows and N columns. For the matrix B with the K rows and the N columns, the matrix B is disassembled into N row matrices by row, that is, $[B_{11} B_{12} ... B_{1N}]$ (corresponding to $[A_{11} A_{21} ... A_{M1}]^T$), $[B_{21} B_{22} ... B_{2N}]$ (corresponding to $[A_{12} A_{22} ... A_{M2}]$), ..., and $[B_{K1} B_{K2} ... B_{KN}]$ (corresponding to $[A_{1K} A_{2K} ... A_{MK}]^T$) are obtained; and then each row matrix is disassembled into one second submatrix (including a floating point number with the second precision) with W rows and N columns and one second exponent matrix (corresponding to the second submatrix) with M rows and N columns. A first submatrix obtained after a column matrix is disassembled corresponds to a second submatrix obtained after a row matrix corresponding to the column matrix is disassembled. For example, a first submatrix obtained after $[A_{11} A_{21} ... A_{M1}]^T$ is disassembled corresponds to a second submatrix obtained after $[B_{11} B_{12} ... B_{1N}]$ is disassembled.

In another possible embodiment, when the to-be-computed matrix includes a matrix A and a matrix B, and the matrix computing type is matrix addition (that is, A+B), the matrix addition may be considered as $A \times O + B$ (or $O \times A + B$), where O is a unit diagonal matrix. In other words, multiplication is performed on the matrix A and the matrix O, and then addition is performed on an obtained matrix multiplication result and the matrix B. Correspondingly, the matrix computing unit may disassemble the matrix A and the matrix O according to the matrix multiplication disassembling process provided above, to obtain a plurality of first submatrices and a plurality of first exponent matrices corresponding to the matrix A, and a plurality of second submatrices and a plurality of second exponent matrices corresponding to the matrix O. Optionally, when obtaining the matrix A and the matrix B, the matrix computing unit may transparently transmit the matrix A and the matrix B. For example, the matrix A and the matrix B are transparently transmitted to an adder in the matrix computing unit (for example, the matrix A and the matrix B are directly transparently transmitted to a high-precision adder shown in FIG. 6 below), and then the matrix A and the matrix B are directly added to obtain a final matrix operation result.

In still another possible embodiment, when the to-be-computed matrix includes a matrix A, a matrix B, and a matrix C, and the matrix computing type is matrix multiplication-addition (that is, A×B+C), the matrix A and the matrix B may be first disassembled in the matrix multiplication disassembling manner provided above, and the matrix C is not disassembled. Then, when a matrix multiplication result of A×B is obtained through computing, the matrix multiplication result is directly added to the matrix C, to obtain a matrix multiplication-addition result of A×B+C.

S303: Perform computing processing on the plurality of disassembled matrices based on the matrix computing type.

The matrix computing type includes matrix multiplication, matrix addition, and matrix multiplication-addition. Different matrix computing types correspond to different computing processing on the plurality of disassembled matrices. The following separately describes computing processing corresponding to different matrix computing types.

In a first case, the matrix computing type is matrix multiplication.

Specifically, the to-be-computed matrix may include a first matrix and a second matrix, disassembled matrices corresponding to the first matrix include a plurality of first submatrices and a plurality of first exponent matrices, disassembled matrices corresponding to the second matrix include a plurality of second submatrices and a plurality of second exponent matrices, and there are correspondences between the plurality of first submatrices, the plurality of first exponent matrices, the plurality of second submatrices, and the plurality of second exponent matrices. In this case, a process of performing computing processing on the plurality of disassembled matrices based on the matrix computing type may include: determining a first operation result of each first submatrix and a corresponding second submatrix based on a correspondence between the plurality of first submatrices and the plurality of second submatrices, to obtain a plurality of first operation results; determining a second operation result of each first exponent matrix and a corresponding second exponent matrix based on a correspondence between the plurality of first exponent matrices and the plurality of second exponent matrices, to obtain a plurality of second operation results; and determining a matrix operation result of the first matrix and the second matrix based on a correspondence between the plurality of first submatrices and the plurality of first exponent matrices, the plurality of first operation results, and the plurality of second operation results. Optionally, the determining a matrix operation result of the first matrix and the second matrix may be: determining a third operation result based on each of the plurality of first operation results and a second operation result corresponding to the first operation result, to obtain a plurality of third operation results, where a first operation result of a first submatrix corresponds to a second operation result of a first exponent matrix corresponding to the first submatrix; and determining the matrix operation result of the first matrix and the second matrix based on the plurality of third operation results. For example, an accumulated sum of the plurality of third operation results is determined as the matrix operation result of the first matrix and the second matrix.

In a possible embodiment, a specific process of determining a first operation result of a first submatrix and a corresponding second submatrix may be: determining a product of the first submatrix and the corresponding second submatrix as the first operation result. For example, if a first submatrix is a matrix a', and a second submatrix corresponding to the matrix a' is a matrix b', a first operation result of the matrix a' and the matrix b' may be a product of the matrix a' and the matrix b'. To be specific, according to a matrix multiplication operation rule, a row element in the matrix a' is multiplied by a column element in a corresponding column in the matrix b', to obtain an element in each row and each column in the first operation result. The first operation result herein may be a matrix including a floating point number with the second precision.

In a possible embodiment, a specific process of determining a second operation result of a first exponent matrix and a corresponding second exponent matrix may be: determining, based on two exponent elements at a same location in the first exponent matrix and the corresponding second exponent matrix, an element at the same location in the second operation result. The second operation result herein may be an exponent matrix. For example, an element in the first row and the first column in the second operation result is determined based on an element in the first row and the first column in the first exponent matrix and an element in the first row and the first column in the second exponent matrix.

Optionally, two floating point numbers at a same location in a first exponent matrix and a corresponding second exponent matrix are X and Y, and a floating point number Z at the same location in a corresponding second operation result satisfies the following formula (I):

$$Z=2^{\wedge}(expX+expY-Q\times 2) \tag{I}$$

In this formula, exp represents an exponential function, and Q is related to precision (that is, the first precision) of floating point numbers included in the first matrix and the second matrix. For example, Q may be $2^{P-1}-1$, and P may be specifically a bit width of an exponent bit in the first precision. Optionally, when the first precision is FP32 and the second precision is FP16, P is equal to 8. In this case, Q may be equal to 127, that is, formula (I) is changed to formula (II). When the first precision is FP48 and the second precision is FP16, P is equal to 11. In this case, Q may be equal to 1023, that is, formula (I) is changed to formula (III).

$$Z=2^{\wedge}(expX+expY-127\times2) \tag{II}$$

$$Z=2^{\wedge}(expX+expY-1023\times2) \tag{III}$$

In a possible embodiment, a specific process of determining the third operation result based on each of the plurality of first operation results and the second operation result corresponding to the first operation result may be: determining a product of elements at a same location in the first operation result and the corresponding second operation result as an element at the same location in the third operation result. The third operation result herein may be a matrix including a floating point number with the first precision. For example, a product of an element in the first row and the first column in the first operation result and an element in the first row and the first column in the corresponding second operation result is determined as an element in the first row and the first column in the second operation result.

In a second case, the matrix computing type is matrix addition.

When the to-be-computed matrix includes a matrix A and a matrix B, addition of the matrix A and the matrix B (that is, A+B) may be considered as A×O+B. After the matrix A and the matrix O are disassembled in S302, matrices obtained after the matrix A and the matrix O are disassembled may be processed according to the computing processing process provided in the first case, to obtain a matrix multiplication result of A×O, and then the matrix multiplication result is added to the matrix B, to obtain a final matrix operation result.

In a third case, the matrix computing type is matrix multiplication-addition.

When the to-be-computed matrix includes a matrix A, a matrix B, and a matrix C, the matrix computing type is matrix multiplication-addition (that is, A×B+C). After the matrix A and the matrix B are disassembled in S302, matrices obtained after the matrix A and the matrix B are disassembled may be processed according to the computing processing process provided in the first case, to obtain a matrix multiplication result of A×B, and then the matrix multiplication result is added to the matrix C, to obtain a final matrix operation result.

Further, before S302, the method may further include S302a.

S302a: Determine that the precision of the floating point number in the to-be-computed matrix is higher than preset precision.

The preset precision may be precision that can be used by the matrix computing unit to implement matrix computing without matrix disassembling, and the preset precision may be set in advance. For example, if the matrix computing unit is a matrix computing unit designed based on FP16, the preset precision may be set to FP16.

Specifically, when obtaining the to-be-computed matrix, the matrix disassembling unit may determine whether the precision of the floating point number included in the to-be-computed matrix is higher than the preset precision. If a determining result is yes, it is determined that the precision of the floating point number in the to-be-computed matrix is higher than the preset precision. In this case, when performing matrix computing, the matrix computing unit may perform matrix disassembling and computing processing in the manners described in S302 and S303, to obtain a final matrix operation result. If a determining result is no, it is determined that the precision of the floating point number in the to-be-computed matrix is lower than or equal to the preset precision. In this case, when performing matrix computing, the matrix computing unit may directly perform computing processing without performing matrix disassembling, to obtain a final matrix operation result.

For ease of understanding, the following describes the technical solutions in this application by using an example in which the to-be-computed matrix includes a first matrix and a second matrix, the matrix computing type is matrix multiplication, and the second precision is FP16. FIG. 6 is a block diagram of a structure of an FP16-based matrix computing unit. The matrix computing unit includes a cache 401, a cache 402, a matrix disassembling unit 403, an exponent multiplier 404, an FP16 computing unit 405, a high-precision adder 406, and a cache 407. Optionally, the cache 401, the cache 402, and the cache 407 may be different storage space in same memory, or each may exist in a form of a register.

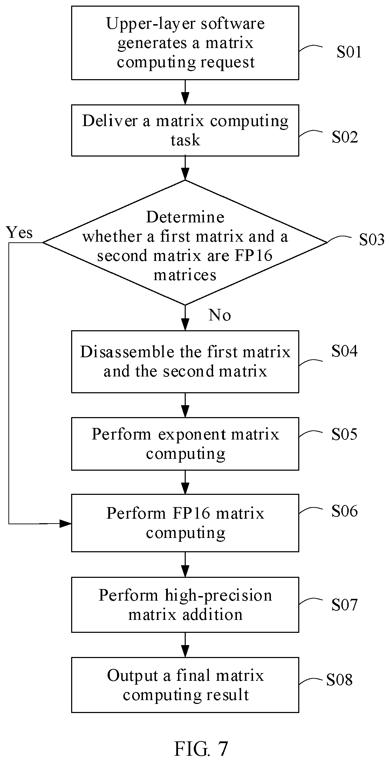

Based on the matrix computing unit shown in FIG. 6, a method provided in this application may specifically include steps S01 to S08 shown in FIG. 7.

S01: Upper-layer software such as an AI application and an HPC application generates a matrix computing request, and sends the matrix computing request to a CPU, where the request may carry a first matrix, a second matrix, and a matrix computing type.

S02: When the CPU receives the request, the CPU may deliver a matrix computing task to the matrix computing unit, that is, schedule the matrix computing unit to execute the matrix computing task. The first matrix, the second matrix, and the matrix computing type may be stored in internal storage space of the CPU in a form of a computing instruction.

S03: The matrix computing unit obtains the first matrix, the second matrix, and the matrix computing type; determines whether the first matrix and the second matrix are FP16 matrices, that is, determines whether precision of floating point numbers included in the first matrix and the second matrix is higher than FP16; and performs S04 if the first matrix and the second matrix are not FP16 matrices; or performs S06 according to a matrix computing method in the conventional technology if the first matrix and the second matrix are FP16 matrices. The cache 401 may be configured to cache the first matrix, and the cache 402 may be configured to cache the second matrix.

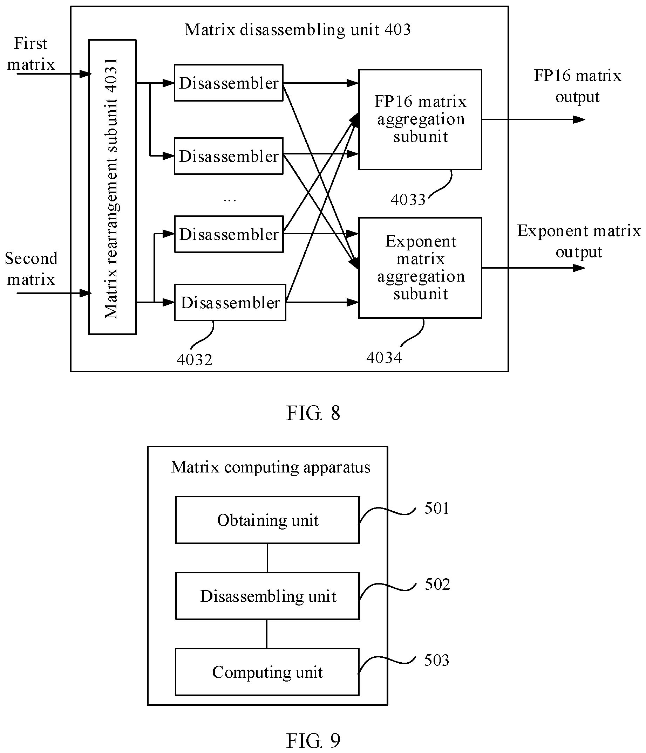

S04: Disassemble the first matrix and the second matrix, that is, disassemble the first matrix in the first manner described in S302 to obtain a plurality of first submatrices and a plurality of first exponent matrices, and disassemble the second matrix in the second manner to obtain a plurality of second submatrices and a plurality of second exponent matrices. The matrix disassembling unit 403 may be configured to perform a step of disassembling the first matrix and the second matrix. Further, as shown in FIG. 8, the matrix disassembling unit 403 may include a matrix rearrangement subunit 4031, a disassembler 4032, an FP16 matrix aggregation subunit 4033, and an exponent matrix aggregation subunit 4034. The matrix rearrangement subunit 4031 may be configured to disassemble the first matrix into a plurality of column matrices by column, and disassemble the second matrix into a plurality of row matrices by row. The disassembler 4032 is configured to disassemble each column matrix into one FP16 matrix and one exponent matrix and disassemble each row matrix into one FP16 matrix and one exponent matrix. Specifically, a second-precision floating point number included in each of the plurality of column matrices is disassembled to obtain a plurality of first submatrices and a plurality of first exponent matrices, and a second-precision floating point number included in each of the plurality of row matrices is disassembled to obtain a plurality of second submatrices and a plurality of second exponent matrices. The FP16 matrix aggregation subunit 4033 is configured to store the plurality of first submatrices and the plurality of second submatrices. The exponent matrix aggregation subunit 4034 is configured to store the plurality of first exponent matrices and the plurality of second exponent matrices.

S05: Perform exponent matrix computing, that is, perform computing on the plurality of first exponent matrices and the plurality of second exponent matrices, to obtain a plurality of second operation results. The exponent multiplier 404 may be configured to perform exponent matrix computing.

S06: Perform FP16 matrix computing, that is, perform computing on the plurality of first submatrices and the plurality of second submatrices, to obtain a plurality of first operation results, and perform computing on the plurality of first operation results and the plurality of second operation results, to obtain a plurality of third operation results. The FP16 computing unit 405 may be configured to perform FP16 matrix computing.

S07: Perform high-precision matrix addition, that is, compute an accumulated sum of the plurality of third operation results, to obtain a final matrix computing result. S08: Output the final matrix computing result. The high-precision adder 406 may be configured to perform the steps of performing high-precision matrix addition and outputting the final matrix computing result. In actual application, matrix addition in S07 may alternatively be performed by using an FP16 adder. This is not specifically limited in this embodiment of this application.

In embodiments of this application, when the matrix computing unit obtains the to-be-computed matrix and the matrix computing type, if the precision of the floating point number included in the to-be-computed matrix is high precision higher than FP16, the matrix computing unit may disassemble the to-be-computed matrix into a plurality of matrices including low-precision floating point numbers, for example, disassemble the to-be-computed matrix into a plurality of matrices including FP16 floating point numbers, and perform, based on the matrix computing type, computing processing on the plurality of matrices including the FP16 floating point numbers, to obtain a matrix operation result corresponding to the to-be-computed matrix. In this way, high-precision matrix computing can be implemented based on a low-precision matrix computing unit, so that applicability of the matrix computing unit is improved. In addition, in a matrix computing process, upper-layer software applications such as an AI application and an HPC application are unaware of a specific matrix computing process, so that software adaptation costs can be greatly reduced.

A floating point number operation method provided in the embodiments is mainly described above from a perspective of a computing device. It may be understood that, to implement the foregoing functions, the computing device includes a corresponding hardware structure and/or software module for performing the functions. A person skilled in the art should be easily aware that, with reference to the example network elements and algorithm steps described in the embodiments disclosed in this specification, this application can be implemented in a form of hardware or a combination of hardware and computer software. Whether a function is implemented by hardware or hardware driven by computer software depends on specific applications and design constraints of the technical solutions. A person skilled in the art may use different methods to implement the described functions for each particular application, but it should not be considered that the implementation goes beyond the scope of this application.

In embodiments of this application, a matrix computing apparatus may be divided into function modules based on the foregoing method examples. For example, each function module may be obtained through division based on each corresponding function, or two or more functions may be integrated into one processing module. The integrated module may be implemented in a form of hardware, or may be implemented in a form of a software function module. It should be noted that division into the modules in embodiments of this application is an example, and is merely logical function division. In actual implementation, there may be another division manner.

When each function module is obtained through division based on each corresponding function, FIG. 9 is a schematic diagram of a possible structure of a matrix computing apparatus in the foregoing embodiments. The apparatus may be a PCIe card, an SoC, a processor, a server including the foregoing hardware, or the like. Alternatively, the apparatus may be implemented in a form of software, and is stored in a storage medium.

As shown in FIG. 9, the apparatus includes an obtaining unit 501, a disassembling unit 502, and a computing unit 503. The obtaining unit 501 is configured to support the apparatus in performing S301 in the method embodiment. The disassembling unit 502 is configured to support the apparatus in performing S302a and 5302 in the method embodiment. The computing unit 503 is configured to support the apparatus in performing S303 in the method embodiment. In a possible embodiment, the disassembling unit 502 may be further configured to support the apparatus in performing S03 and S04 in the method embodiment, and the computing unit 503 may be further configured to support the apparatus in performing S05 to S08 in the method embodiment.

The foregoing describes the matrix computing apparatus in embodiments of this application from a perspective of a modular functional entity, and the following describes a matrix computing apparatus in embodiments of this application from a perspective of hardware processing.

In an embodiment of this application, a matrix computing circuit is provided. The matrix computing circuit may be configured to perform one or more steps in S301 to S303 or one or more steps in S03 to S08 in the foregoing method embodiment. In actual application, the matrix computing circuit may be an ASIC, an FPGA, a logic circuit, or the like.

In another embodiment of this application, a matrix computing system or a chip is further provided. A structure of the system or the chip may be shown in FIG. 3. The apparatus includes a processor (for example, a central processing unit) 1 and a matrix computing unit 1. The processor 1 is configured to send a computing instruction to the matrix computing unit 1, and the matrix computing unit 2 is configured to perform one or more steps in S301 to S303 or one or more steps in S03 to S08 in the foregoing method embodiment.

In still another embodiment of this application, a matrix computing device is provided. A structure of the device may be shown in FIG. 2. The device may be specifically a PCIe card, an SoC, a processor, a server including the foregoing hardware, or the like. As shown in FIG. 2, the apparatus includes a memory 201, a processor 202, a communication interface 203, and a bus 204. The communication interface 203 may include an input interface and an output interface.

The processor 202 may be configured to perform one or more steps in S301 to S303 or one or more steps in S01 to S08 in the foregoing method embodiment. In some feasible embodiments, the processor 202 may include a matrix computing unit. The matrix computing unit may be configured to support the processor in performing one or more steps in the foregoing method embodiment. In actual application, the matrix computing unit may be an ASIC, an FPGA, a logic circuit, or the like. Certainly, the matrix computing unit may alternatively be implemented by using software. This is not specifically limited in this embodiment of this application.

It should be noted that components of the matrix computing circuit, the matrix computing system, the matrix computing device, and the like provided in embodiments of this application are separately configured to implement functions of corresponding steps in the foregoing method embodiments. Because the steps have been described in detail in the foregoing method embodiments, details are not described herein again.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded or executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid state drive (solid state drive, SSD).

The foregoing descriptions are only specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A matrix computing method, wherein the method is performed by a matrix computing unit and comprises:

    obtaining a computing instruction, wherein the computing instruction comprises a to-be-computed matrix and a matrix computing type;
    disassembling the to-be-computed matrix to obtain a plurality of disassembled matrices, wherein precision of a floating point number in the disassembled matrix is lower than precision of a floating point number in the to-be-computed matrix; and
    performing computing processing on the plurality of disassembled matrices based on the matrix computing type.

2. The method according to claim 1, wherein the disassembling the to-be-computed matrix to obtain a plurality of disassembled matrices comprises:
    disassembling the to-be-computed matrix according to a preset rule to obtain the plurality of disassembled matrices, wherein the preset rule is used to disassemble a floating point number with first precision in the to-be-computed matrix into floating point numbers with second precision, and the second precision is lower than the first precision.

3. The method according to claim 1, wherein the disassembling the to-be-computed matrix to obtain a plurality of disassembled matrices comprises:
    disassembling the to-be-computed matrix comprising a floating point number with first precision into a plurality of matrices comprising floating point numbers with second precision and a plurality of exponent matrices, wherein the second precision is lower than the first precision.

4. The method according to claim 3, wherein the disassembling the to-be-computed matrix comprising a floating point number with first precision into a plurality of matrices comprising floating point numbers with second precision and a plurality of exponent matrices comprises:

    disassembling the to-be-computed matrix comprising the floating point number with the first precision into a plurality of column matrices by column; and
    disassembling each of the plurality of column matrices into one first submatrix comprising a floating point number with the second precision and one first exponent matrix, to obtain a plurality of first submatrices and a plurality of first exponent matrices, wherein a first submatrix and a first exponent matrix obtained by disassembling a same column matrix correspond to each other.

5. The method according to claim 3 or 4, wherein the disassembling the to-be-computed matrix comprising a floating point number with first precision into a plurality of matrices comprising floating point numbers with second precision and a plurality of exponent matrices comprises:

    disassembling the to-be-computed matrix comprising the floating point number with the first precision into a plurality of row matrices by row; and
    disassembling each of the plurality of row matrices into one second submatrix comprising a floating point number with the second precision and one second exponent matrix, to obtain a plurality of second submatrices and a plurality of second exponent matrices, wherein a second submatrix and a second exponent matrix obtained by disassembling a same row matrix correspond to each other.

6. The method according to any one of claims 1 to 5, wherein the to-be-computed matrix comprises a first matrix and a second matrix, disassembled matrices corresponding to the first matrix comprise a plurality of first submatrices and a plurality of first exponent matrices, disassembled matrices corresponding to the second matrix comprise a plurality of second submatrices and a plurality of second exponent matrices, there are correspondences between the plurality of first submatrices, the plurality of first exponent matrices, the plurality of second submatrices, and the plurality of second exponent matrices, and when the matrix computing type is matrix multiplication, the performing computing processing on the plurality of disassembled matrices based on the matrix computing type comprises:

    determining a first operation result of each first submatrix and a corresponding second submatrix based on a correspondence between the plurality of first submatrices and the plurality of second submatrices, to obtain a plurality of first operation results;
determining a second operation result of each first exponent matrix and a corresponding second exponent matrix based on a correspondence between the plurality of first exponent matrices and the plurality of second exponent matrices, to obtain a plurality of second operation results; and
determining a matrix operation result of the first matrix and the second matrix based on a correspondence between the plurality of first submatrices and the plurality of first exponent matrices, the plurality of first operation results, and the plurality of second operation results.

7. The method according to claim 6, wherein the determining a matrix operation result of the first matrix and the second matrix based on a correspondence between the plurality of first submatrices and the plurality of first exponent matrices, the plurality of first operation results, and the plurality of second operation results comprises:

determining a third operation result based on each of the plurality of first operation results and a second operation result corresponding to the first operation result, to obtain a plurality of third operation results, wherein a first operation result of a first submatrix corresponds to a second operation result of a first exponent matrix corresponding to the first submatrix; and
determining the matrix operation result of the first matrix and the second matrix based on the plurality of third operation results.

8. The method according to claim 6 or 7, wherein two floating point numbers at a same location in a first exponent matrix and a corresponding second exponent matrix are X and Y, and a floating point number Z at the same location in a corresponding second operation result satisfies the following formula:

$$Z=2^{\wedge}(\exp X+\exp Y-Q\times 2),$$

wherein
Q is related to precision of floating point numbers comprised in the first matrix and the second matrix, and exp represents an exponential function.

9. The method according to any one of claims 1 to 8, wherein the matrix computing unit is integrated into a general-purpose processor, and the obtaining a computing instruction comprises: obtaining the computing instruction from a register; or
the matrix computing unit is integrated outside a general-purpose processor, and the obtaining a computing instruction comprises: obtaining the computing instruction from a memory.

10. The method according to any one of claims 1 to 9, wherein the precision of the floating point number in the to-be-computed matrix is FP32 or FP64, and the precision of the floating point number in the disassembled matrix is FP16.

11. The method according to any one of claims 1 to 10, wherein before the disassembling the to-be-computed matrix to obtain a plurality of disassembled matrices, the method further comprises:
determining that the precision of the floating point number in the to-be-computed matrix is higher than preset precision.

12. A matrix computing apparatus, comprising:

an obtaining unit, configured to obtain a computing instruction, wherein the computing instruction comprises a to-be-computed matrix and a matrix computing type;
a disassembling unit, configured to disassemble the to-be-computed matrix to obtain a plurality of disassembled matrices, wherein precision of a floating point number in the disassembled matrix is lower than precision of a floating point number in the to-be-computed matrix; and
a computing unit, configured to perform computing processing on the plurality of disassembled matrices based on the matrix computing type.

13. The apparatus according to claim 12, wherein the disassembling unit is further configured to:
disassemble the to-be-computed matrix according to a preset rule to obtain the plurality of disassembled matrices, wherein the preset rule is used to disassemble a floating point number with first precision in the to-be-computed matrix into floating point numbers with second precision, and the second precision is lower than the first precision.

**14.** The apparatus according to claim 12, wherein the disassembling unit is further configured to:
disassemble the to-be-computed matrix comprising a floating point number with first precision into a plurality of matrices comprising floating point numbers with second precision and a plurality of exponent matrices, wherein the second precision is lower than the first precision.

**15.** The apparatus according to claim 14, wherein the disassembling unit is further configured to:

disassemble the to-be-computed matrix comprising the floating point number with the first precision into a plurality of column matrices by column; and
disassemble each of the plurality of column matrices into one first submatrix comprising a floating point number with the second precision and one first exponent matrix, to obtain a plurality of first submatrices and a plurality of first exponent matrices, wherein a first submatrix and a first exponent matrix obtained by disassembling a same column matrix correspond to each other.

**16.** The apparatus according to claim 14 or 15, wherein the disassembling unit is further configured to:

disassemble the to-be-computed matrix comprising the floating point number with the first precision into a plurality of row matrices by row; and
disassemble each of the plurality of row matrices into one second submatrix comprising a floating point number with the second precision and one second exponent matrix, to obtain a plurality of second submatrices and a plurality of second exponent matrices, wherein a second submatrix and a second exponent matrix obtained by disassembling a same row matrix correspond to each other.

**17.** The apparatus according to any one of claims 12 to 16, wherein the to-be-computed matrix comprises a first matrix and a second matrix, disassembled matrices corresponding to the first matrix comprise a plurality of first submatrices and a plurality of first exponent matrices, disassembled matrices corresponding to the second matrix comprise a plurality of second submatrices and a plurality of second exponent matrices, there are correspondences between the plurality of first submatrices, the plurality of first exponent matrices, the plurality of second submatrices, and the plurality of second exponent matrices, and when the matrix computing type is matrix multiplication, the computing unit is further configured to:

determine a first operation result of each first submatrix and a corresponding second submatrix based on a correspondence between the plurality of first submatrices and the plurality of second submatrices, to obtain a plurality of first operation results;
determine a second operation result of each first exponent matrix and a corresponding second exponent matrix based on a correspondence between the plurality of first exponent matrices and the plurality of second exponent matrices, to obtain a plurality of second operation results; and
determine a matrix operation result of the first matrix and the second matrix based on a correspondence between the plurality of first submatrices and the plurality of first exponent matrices, the plurality of first operation results, and the plurality of second operation results.

**18.** The apparatus according to claim 17, wherein the computing unit is further configured to:

determine a third operation result based on each of the plurality of first operation results and a second operation result corresponding to the first operation result, to obtain a plurality of third operation results, wherein a first operation result of a first submatrix corresponds to a second operation result of a first exponent matrix corresponding to the first submatrix; and
determine the matrix operation result of the first matrix and the second matrix based on the plurality of third operation results.

**19.** The apparatus according to claim 17 or 18, wherein two floating point numbers at a same location in a first exponent matrix and a corresponding second exponent matrix are X and Y, and a floating point number Z at the same location in a corresponding second operation result satisfies the following formula:

$$Z=2^{\wedge}(expX+expY-Q\times2),$$

wherein

Q is related to precision of floating point numbers comprised in the first matrix and the second matrix, and exp represents an exponential function.

20. The apparatus according to any one of claims 12 to 19, wherein the matrix computing unit is integrated into a general-purpose processor, and the obtaining unit is further configured to obtain the computing instruction from a register; or the matrix computing unit is integrated outside a general-purpose processor, and the obtaining unit is further configured to obtain the computing instruction from a memory.

21. The apparatus according to any one of claims 12 to 20, wherein the precision of the floating point number in the to-be-computed matrix is FP32 or FP64, and the precision of the floating point number in the disassembled matrix is FP16.

22. The apparatus according to any one of claims 12 to 21, wherein the disassembling unit is further configured to: determine that the precision of the floating point number in the to-be-computed matrix is higher than preset precision.

23. A matrix computing circuit, wherein the matrix computing circuit is configured to perform the matrix computing method according to any one of claims 1 to 11.

24. A matrix computing system, wherein the system comprises a processor and a matrix computing unit, the processor is configured to send a computing instruction to the matrix computing unit, and the matrix computing unit is configured to perform the matrix computing method according to any one of claims 1 to 11.

25. A chip, wherein the chip comprises a processor, a matrix computing unit is integrated into the processor, and the matrix computing unit is configured to perform the matrix computing method according to any one of claims 1 to 11.

26. A matrix computing device, wherein the device comprises the matrix computing system according to claim 24 or the chip according to claim 25.

FP16-based matrix computing unit

| Cache A | | Computing unit | | Adder | | Cache C |

FIG. 1

Computing device

Communication interface 203

Processor 202

204

Memory 201

FIG. 2

**Central processing unit 1**

Controller 11

Arithmetic logic unit

Arithmetic logic unit

12

Cache 13

Matrix computing unit 2

Memory management unit 14

Dynamic random access memory 201

(a)

**Central processing unit 1**

Arithmetic logic unit

Arithmetic logic unit

Controller 11

Cache 13

Memory management unit 14

Matrix computing unit 2

Dynamic random access memory 201

(b)

FIG. 3

Obtain a computing instruction, where the computing instruction includes a to-be-computed matrix and a matrix computing type — S301

Determine that precision of a floating point number in the to-be-computed matrix is higher than preset precision — S302a

Disassemble the to-be-computed matrix to obtain a plurality of disassembled matrices, where precision of a floating point number in the disassembled matrix is lower than the precision of the floating point number in the to-be-computed matrix — S302

Perform computing processing on the plurality of disassembled matrices based on the matrix computing type — S303

FIG. 4

$$A \times B = \begin{bmatrix} A_{11} & A_{12} & \ldots & A_{1K} \\ A_{21} & A_{22} & \ldots & A_{2K} \\ \ldots & \ldots & \ldots & \ldots \\ A_{M1} & A_{M2} & \ldots & A_{MK} \end{bmatrix} \times \begin{bmatrix} B_{11} & B_{12} & \ldots & B_{1N} \\ B_{21} & B_{22} & \ldots & B_{2N} \\ \ldots & \ldots & \ldots & \ldots \\ B_{K1} & B_{M2} & \ldots & B_{KN} \end{bmatrix}$$

$$\begin{bmatrix} A_{11} \\ A_{21} \\ \ldots \\ A_{M1} \end{bmatrix} \times \begin{bmatrix} B_{11} & B_{12} & \ldots & B_{1N} \end{bmatrix} + \ldots + \begin{bmatrix} A_{1K} \\ A_{2K} \\ \ldots \\ A_{MK} \end{bmatrix} \times \begin{bmatrix} B_{K1} & B_{K2} & \ldots & B_{KN} \end{bmatrix}$$

First submatrix with M rows and W columns

First exponent matrix with M rows and N columns

Second submatrix with W rows and N columns

Second exponent matrix with M rows and N columns

FIG. 5

Matrix computing unit

| Cache 401 | | | |
| Cache 402 | Matrix disassembling unit 403 | FP16 computing unit 405 | |
| | | Exponent multiplier 404 | High-precision adder 406 | Cache 407 |

FIG. 6

```
┌─────────────────────────┐
│   Upper-layer software  │
│   generates a matrix    │ ⟍  S01
│   computing request     │
└─────────────────────────┘
            │
            ▼
┌─────────────────────────┐
│  Deliver a matrix computing │ ⟍  S02
│          task           │
└─────────────────────────┘
            │
            ▼
         ╱────────────╲
        ╱   Determine   ╲
Yes    ╱ whether a first matrix and a ╲  ⟍  S03
◄──────╲  second matrix are FP16  ╱
        ╲     matrices     ╱
         ╲────────────╱
            │  No
            ▼
┌─────────────────────────┐
│  Disassemble the first matrix │ ⟍  S04
│     and the second matrix   │
└─────────────────────────┘
            │
            ▼
┌─────────────────────────┐
│  Perform exponent matrix │ ⟍  S05
│        computing        │
└─────────────────────────┘
            │
            ▼
┌─────────────────────────┐
│   Perform FP16 matrix   │ ⟍  S06
│        computing        │
└─────────────────────────┘
            │
            ▼
┌─────────────────────────┐
│   Perform high-precision │ ⟍  S07
│     matrix addition     │
└─────────────────────────┘
            │
            ▼
┌─────────────────────────┐
│   Output a final matrix │ ⟍  S08
│     computing result    │
└─────────────────────────┘
```

FIG. 7

FIG. 8

FIG. 9

## INTERNATIONAL SEARCH REPORT

| | |
|---|---|
| | International application No. |
| | **PCT/CN2021/106961** |

**A. CLASSIFICATION OF SUBJECT MATTER**

G06F 17/16(2006.01)i; G06F 7/483(2006.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

EPODOC, WPI, CNPAT, CNKI, IEEE: 浮点数, 运算, 乘法, 加法, 高, 低, 精度, 矩阵, 拆分, 分解, 指数, 尾数, 行, 列, float, operation, multiplication, add, high, low, precision, matrix, split, decomposition, exponent, mantissa, row, column

**C. DOCUMENTS CONSIDERED TO BE RELEVANT**

| Category* | Citation of document, with indication, where appropriate, of the relevant passages | Relevant to claim No. |
|---|---|---|
| X | US 2019324723 A1 (INTEL CORPORATION) 24 October 2019 (2019-10-24) abstract, description paragraphs 14-54 and 61-89, figures 1-3C | 1-2, 9-13, 20-26 |
| A | CN 107045494 A (IFLYTEK CO., LTD.) 15 August 2017 (2017-08-15) entire document | 1-26 |
| A | CN 110989970 A (GUANGZHOU HAIGE COMMUNICATIONS GROUP INCORPORATED COMPANY) 10 April 2020 (2020-04-10) entire document | 1-26 |
| A | CN 110998570 A (MICROSOFT TECHNOLOGY LICENSING L.L.C.) 10 April 2020 (2020-04-10) entire document | 1-26 |
| A | CN 107526709 A (NVIDIA CORP.) 29 December 2017 (2017-12-29) entire document | 1-26 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **23 September 2021** | **27 October 2021** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/106961**

| Patent document cited in search report | | | Publication date (day/month/year) | Patent family member(s) | | | Publication date (day/month/year) |
|---|---|---|---|---|---|---|---|
| US | 2019324723 | A1 | 24 October 2019 | CN | 112148250 | A | 29 December 2020 |
| | | | | DE | 102020113480 | A1 | 31 December 2020 |
| | | | | IN | 202044010107 | A | 01 January 2021 |
| CN | 107045494 | A | 15 August 2017 | None | | | |
| CN | 110989970 | A | 10 April 2020 | None | | | |
| CN | 110998570 | A | 10 April 2020 | WO | 2019036111 | A1 | 21 February 2019 |
| | | | | EP | 3649567 | A1 | 13 May 2020 |
| | | | | US | 10167800 | B1 | 01 January 2019 |
| | | | | IN | 201947054837 | A | 10 January 2020 |
| CN | 107526709 | A | 29 December 2017 | DE | 102017113232 | A1 | 21 December 2017 |
| | | | | US | 2017372202 | A1 | 28 December 2017 |

Form PCT/ISA/210 (patent family annex) (January 2015)